# EUROPÄISCHE PATENTSCHRIFT

(11) **EP 2 522 680 B1**
(45) Veröffentlichungstag und Bekanntmachung des Hinweises auf die Patenterteilung: **07.08.2013**
(21) Anmeldenummer: 11165546.0
(22) Anmeldetag: 10.05.2011
(51) Int. Cl.: C08F 216/14, C08F 220/06, C08F 222/06, C04B 24/26

(54) **Polymer aus Maleinsäure, Allylether und (Meth-)Acrylsäureverbindungen, dessen Herstellung und Verwendung**
Polymer comprising maleic acid, allylether and (meth-)acrylic acid, its process of production and use
Polymère composé d'acide maléique, allylester et (méth-)acryle, sa fabrication et son utilisation

(43) Veröffentlichungstag der Anmeldung: 14.11.2012
(73) Patentinhaber: Sika Technology AG, 6340 Baar (CH)
(72) Erfinder: Sulser, Ueli, 8103, Unterengstringen (CH); Frunz, Lukas, 8057, Zürich (CH); Zimmermann, Jörg, 8046, Zürich (CH)
(74) Vertreter: Sika Patent Attorneys

(56) Entgegenhaltungen:
- WO-A2-2010/029117
- DE-A1-102005 061 153

## Beschreibung

### Technisches Gebiet

Die vorliegende Erfindung betrifft Zusatzmittel für hydraulisch abbindende Systeme, insbesondere Dispergiermittel für Betonzusammensetzungen.

### Stand der Technik

Polymere aus Maleinsäure oder deren Derivaten mit Allylethern oder Vinylethern werden in der Betontechnologie als Verflüssiger wegen ihrer Wasserreduktion eingesetzt. Bei Zusatz solcher Polymere zu hydraulisch abbindenden Zusammensetzungen wie Zementen kann der Wasseranteil erniedrigt werden, was für die Stabilität des Betons von Vorteil ist. Diese Polymere haben eine Kammpolymerstruktur. Im Stand der Technik werden zur Herstellung von gattungsgemässen Kammpolymeren im Wesentlichen Temperaturen von über 60°C verwendet, beispielsweise in US 6,388,038 B1.

Ein besonderes Problem bei bekannten Verflüssigern auf der Basis von Kammpolymeren besteht darin, dass die Langzeitverarbeitbarkeit mit der Zeit schnell abnimmt, so dass die hydraulisch abbindenden Zusammensetzungen nach kurzer Zeit nur noch schlecht verarbeitbar sind.

Die WO 2010/029117 A2 (Construction Research and Technology GmbH) befasst sich mit Copolymeren welche eine verbesserte Langzeitverarbeitbarkeit von zementösen Zusammensetzungen ergeben. Beschrieben ist beispielsweise ein Copolymer aus den Monomeren Maleinsäureanhydrid, zwei unterschiedlichen vinyl-Polyethylenglykolen und Hydroxypropylacrylat.

Aus der DE 10 2005 061 153 A1 (Construction Research and Technology GmbH) ist in diesem Zusammenhang z.B. ein Copolymer aus den Monomeren Maleinsäureanhydrid, 1-propenyloxypolyethylenglykol und Acrylsäure bekannt.

### Darstellung der Erfindung

Aufgabe der vorliegenden Erfindung ist es daher, Polymere aus Maleinsäure oder deren Derivaten und Allylethern zur Verfügung zu stellen, welche die oben beschriebenen Nachteile nicht aufweisen. Es sollen neue Verflüssiger auf Basis von Maleinsäure oder deren Derivaten und Allylethern zur Verwendung in hydraulisch abbindenden Zusammensetzungen bereitgestellt werden, die besondere und vorteilhafte Eigenschaften aufweisen. Die Polymere sollen in hydraulisch abbindenden Zusammensetzungen eine verbesserte verflüssigende Wirkung zeigen. Der Erfindung liegt insbesondere das Problem zugrunde, Polymere bereitzustellen, die hydraulisch abbindenden Zusammensetzungen eine gute Langzeitverarbeitbarkeit ermöglichen.

Überraschenderweise wurde nun gefunden, dass Polymere gemäss Anspruch 1 sowie Polymere hergestellt nach einem Verfahren gemäss Anspruch 6 diese Aufgabe lösen. Solche Polymere führen in hydraulisch abbindenden Zusammensetzungen sowohl zu einer Verbesserung der Langzeitverarbeitbarkeit als auch zu einer Verbesserung der Wasserreduktion.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft ein Polymer **P** umfassend:
a. *m* Mol-% mindestens einer Struktureinheit **A** der Formel (I); 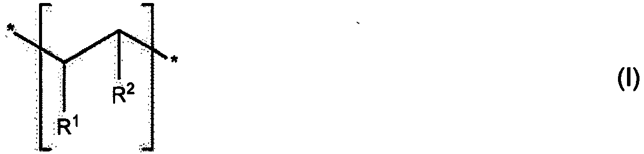
b. *n* Mol-% mindestens einer Struktureinheit **B** der Formel (II); 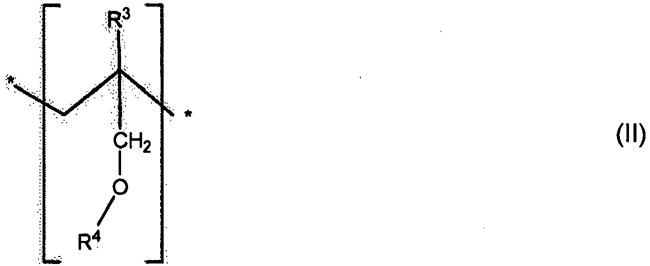
c. *o* Mol-% mindestens einer Struktureinheit **C** der Formel (III); 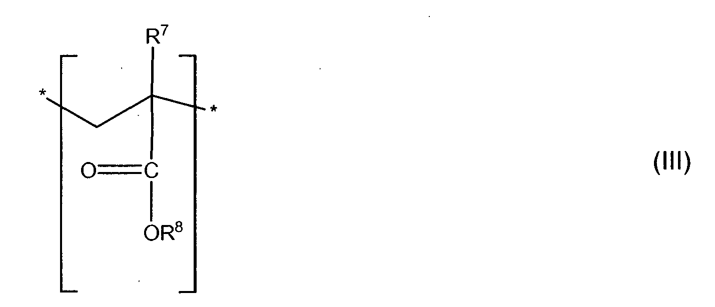 und gegebenenfalls
d. *p* Mol-% mindestens einer weiteren Struktureinheit **D**;
wobei R¹ und R² hierbei unabhängig voneinander je für COO⁻M oder COOR⁴ steht,
R³ für H oder CH₃, insbesondere für H, steht,
R⁴ 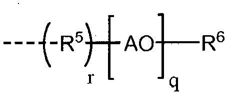 für steht,
R⁵ für eine Alkylengruppe mit 1 bis 6 C-Atomen steht,
R⁶ für H, eine Alkylgruppe, vorzugsweise mit 1 bis 20 C-Atomen, eine Alkylarylgruppe, vorzugsweise mit 7 bis 20 C-Atomen, steht,
R⁷ für H oder CH₃, insbesondere für H, steht,
R⁸ für M, eine Alkylgruppe mit 1 bis 6 C-Atomen, für eine Hydroxyalkylgruppe mit 1 bis 6 C-Atomen oder für 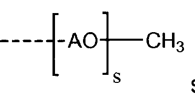 steht;
wobei der Substituent A unabhängig voneinander für eine C2- bis C4-Alkylengruppe steht, der Index q einen Wert von 2 bis 300, insbesondere von 2 bis 50, darstellt, der Index r einen Wert von 0 bis 1 darstellt und der Index s einen Wert von 1 bis 5 darstellt;
wobei M = Kation, vorzugsweise H⁺, Alkalimetallion, Erdalkalimetallion, zwei- oder dreiwertiges Metallion, NH₄⁺ oder ein organisches Ammonium, insbesondere bevorzugt H⁺, Na⁺, Ca⁺⁺/2, Mg⁺⁺/2, NH₄⁺ oder ein organisches Ammonium bedeutet;
wobei *m*, *n*, *o, p* unabhängig voneinander Zahlen bedeuten, wobei die Summe *m+n+o+p =* 100, und *m*>0, *n*>0, *o*>0 und *p*≥0 bedeuten; und
wobei
*m* = 10 - 80, vorzugsweise 30 - 60, insbesondere bevorzugt 40 - 55, am meisten bevorzugt 40 - 55,
*n* = 10 - 50, vorzugsweise 20 - 40, insbesondere bevorzugt 30 - 40,
*o* = 10 - 50, vorzugsweise 15 - 30, insbesondere bevorzugt 17.5 - 30, am meisten bevorzugt 20 - 25,
*p* = 0 - 20, vorzugsweise 0 - 10, insbesondere bevorzugt 0 - 5, beträgt.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können.

Unter dem Begriff "Kammpolymer" wird im vorliegenden Dokument ein Kammpolymer bestehend aus einer linearen Polymerkette (=Hauptkette), an welcher über Ester- oder Ethergruppen Seitenketten angebunden sind, verstanden. Die Seitenketten bilden hierbei bildlich gesprochen die "Zähne" eines "Kamms".

Dem Fachmann ist klar, dass es sich bei COO⁻M einerseits um ein Carboxylat handelt, an welches das Ion M gebunden ist, und dass andererseits bei mehrwertigen Ionen M die Ladung durch Gegenionen ausgeglichen sein muss.

Die fett markierten Bezeichnungen wie **P, A, A', B, B', C, C', D, D'** und dergleichen im vorliegenden Dokument dienen lediglich für das bessere Leseverständnis und Identifizierung.

Bei der Struktureinheit **C** handelt es sich typischerweise um eine Einheit, entstanden durch Polymerisation einer (Meth)acrylsäure oder Derivate davon, insbesondere deren Salze, Anhydride oder Ester. Unter "(Meth)acrylsäure" wird im gesamten vorliegenden Dokument sowohl Acrylsäure als auch Methacrylsäure verstanden. Beispiele für solche Ester sind Methyl-(Meth)acrylat, Ethyl-(Meth)acrylat, Propyl-(Meth)acrylat, Butyl-(Meth)acrylat, Pentyl-(Meth)acrylat, 2-Hyroxyethyl-(Meth)acrylat, Hyroxypropyl-(Meth)acrylat, 4-Hyroxybutyl-(Meth)acrylat, 5-Hyroxypentyl-(Meth)acrylat, 2-Methoxyethyl-(Meth)acrylat, 2-(2-Methoxyethoxy)ethyl-(Meth)acrylat, 2-(2-(2-Methoxyethoxy)ethoxy)ethyl-(Meth)acrylat, 3-Methoxypropyl-(Meth)acrylat, 3-(3-Methoxypropoxy)propyl-(Meth)acrylat, 3-(3-(3-Methoxypropoxy)propoxy)-propyl-(Meth)acrylat.

Bei der Struktureinheit **D** handelt es sich typischerweise um Einheiten, die durch Polymerisation entstehen von ethylenisch ungesättigten Carbonsäuren oder deren Derivaten, insbesondere deren Salze, Anhydride, Ester oder Amide.

Beispiele für geeignete Struktureinheiten **D** sind Einheiten, die durch Polymerisation entstehen von Mesaconsäure, Citraconsäure, Glutactonsäure, Fumarsäure, Maleaminsäure, Itaconsäure, Vinylbenzoesäure, Crotonsäure, oder Anhydride der vorgehend genannten Säuren oder Derivate davon, insbesondere deren Salze, Anhydride, Ester oder Amide. Bevorzugt sind Monocarbonsäuren, oder Derivate davon, insbesondere deren Salze, Anhydride, Ester oder Amide.

Es kann weiter vorteilhaft sein, wenn das Polymer **P** weniger als 5 Mol-% Struktureinheit **D,** insbesondere keine Struktureinheit **D,** aufweist.

Das Polymer **P** weist vorzugsweise ein mittleres Molekulargewicht Mₙ von 2000-200'000 g/mol, vorzugsweise 5'000-70'000 g/mol, insbesondere bevorzugt 15'000-50'000 g/mol auf.

Es ist weiter besonders vorteilhaft, wenn bei dem Polymer P m = 40 - 50, n = 30 - 40, o = 17.5 - 30, insbesondere o = 20 - 25 und *p* = 0 - 5, insbesondere *p* = 0, beträgt.

Vorzugsweise steht in dem Polymer **P** R⁸ für M. Dies ist dahingehend von Vorteil, dass besonders gute Resultate für die Erhöhung der Langzeitverarbeitbarkeit von hydraulisch abbindenden Zusammensetzungen erzielt werden.

Es kann weiter von Vorteil sein, wenn R⁸ für eine Alkylgruppe mit 1 bis 6 C-Atomen, für eine Hydroxyalkylgruppe mit 1 bis 6 C-Atomen oder für 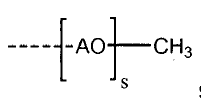 steht, insbesondere für eine Hydroxyalkylgruppe mit 1 bis 6 C-Atomen steht. Dies ist dahingehend von Vorteil, dass nach Zugabe in hydraulisch abbindenden Zusammensetzungen das Ausbreitmass über eine gewisse Zeit ansteigt. Somit lässt sich beispielsweise die Verflüssigungswirkung in Kombination mit anderen Verflüssigern bequem einstellen. So lässt sich beispielsweise in Kombination mit Verflüssiger, welche sofort nach Zugabe zu einem sehr hohen Ausbreitmass führen, dessen Ausbreitmass jedoch über Zeit schnell abfällt, eine über Zeit gleichbleibende Verarbeitbarkeit erreichen.

In einer bevorzugten Ausführungsform umfasst das Polymer P:
40 - 50 Mol-% der Struktureinheit **A** der Formel (I);
30 - 40 Mol-% der Struktureinheit **B** der Formel (II);
20 - 25 Mol-% der Struktureinheit **C;**
jeweils bezogen auf die Gesamtmolmenge der Struktureinheiten von **A, B und C** im Polymer **P.**

In einer besonders bevorzugten Ausführungsform besteht das Polymer **P** zu mehr als 95 Gew.-%, vorzugsweise zu mehr als 98 Gew.-%, aus vorgehend genannten Struktureinheiten von **A, B** und **C** mit den vorgehend als bevorzugt genannten Verhältnissen der Mol-%. Das Polymer **P** kann also neben den Struktureinheiten von **A**, **B** und **C** noch weitere Struktureinheiten aufweisen, die beispielsweise von Molekulargewichtsreglern herrühren.

In einer weiteren bevorzugten Ausführungsform steht bei dem Polymer **P**
R¹ und R² je für COO-M;
R³ für H;
R⁴ für 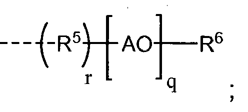 R⁵ für eine Alkylengruppe mit 1 bis 6 C-Atomen;
R⁶ für H, eine Alkylgruppe, vorzugsweise mit 1 bis 20 C-Atomen, insbesondere steht R⁶ für CH₃,
R⁷ für H oder CH₃, insbesondere für H,
R⁸ für M;
der Substituent A unabhängig voneinander für eine C2- bis C4-Alkylengruppe steht, der Index q einen Wert von 2 bis 300, insbesondere von 2 bis 50;
der Index r für einen Wert von 0 bis 1, insbesondere 0;
M = Kation, vorzugsweise H⁺, Alkalimetallion, Erdalkalimetallion, zwei-oder dreiwertiges Metallion, NH₄⁺ oder ein organisches Ammonium, insbesondere bevorzugt H⁺, Na⁺, Ca⁺⁺/2, Mg⁺⁺/2, NH₄⁺ oder ein organisches Ammonium, am meisten bevorzugt für H⁺;
*m* = 40 - 50;
*n* = 30 - 40;
*o* = 20 - 25;
*p*=0.

In einer weiteren bevorzugten Ausführungsform steht bei dem Polymer
**P**
R¹ und R² je für COO-M;
R³ für H;
R⁴ für 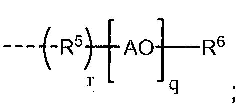 ;
R⁵ für eine Alkylengruppe mit 1 bis 6 C-Atomen;
R⁶ für H, eine Alkylgruppe, vorzugsweise mit 1 bis 20 C-Atomen, insbesondere steht R⁶ für CH₃,
R⁷ für H,
R⁸ für eine Hydroxyalkylgruppe mit 1 bis 6 C-Atomen;
der Substituent A unabhängig voneinander für eine C2- bis C4-Alkylengruppe steht, der Index q einen Wert von 2 bis 300, insbesondere von 2 bis 50;
der Index r für einen Wert von 0 bis 1, insbesondere 0;
M = Kation, vorzugsweise H⁺, Alkalimetallion, Erdalkalimetallion, zwei-oder dreiwertiges Metallion, NH₄⁺ oder ein organisches Ammonium, insbesondere bevorzugt H⁺, Na⁺, Ca⁺⁺/2, Mg⁺⁺/2, NH₄⁺ oder ein organisches Ammonium, am meisten bevorzugt für H⁺;
*m* = 40 - 50;
*n* = 30 - 40;
*o* = 20 - 25;
*p*=0.

In einem weiteren Aspekt betrifft die vorliegende Erfindung ein Verfahren zur Herstellung eines Polymers **P**, wie es vorgehend beschrieben wurde.

In einer bevorzugten Ausführungsform handelt es sich bei dem Verfahren zur Herstellung eines Polymers **P** um ein Verfahren zur Herstellung eines Polymers **P** umfassend den Schritt der radikalische Polymerisation von:
i) *m*' Mol-% mindestens einer Verbindung **A**', welche ein Maleinsäureanhydrid ist oder eine Verbindung der Formel (IV); 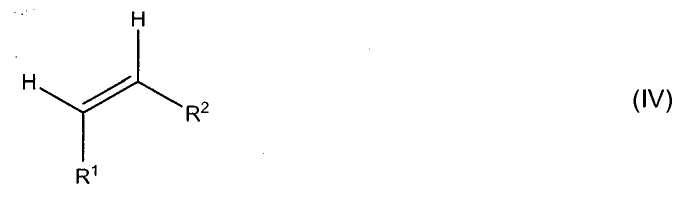
ii) *n*' Mol-% mindestens einer Verbindung B' der Formel (V); 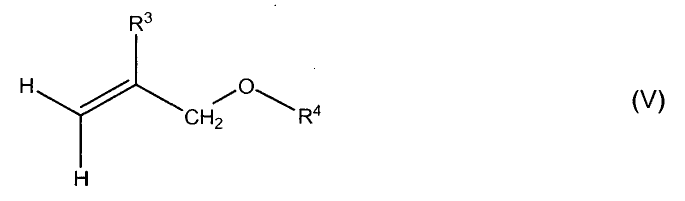
iii) *o*' Mol-% mindestens einer Verbindung C' der Formel (VI); 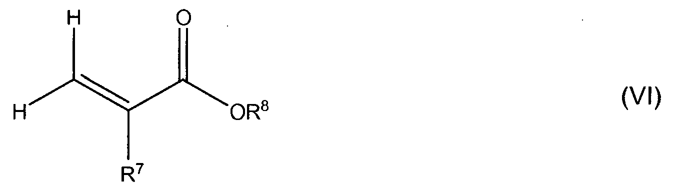 und gegebenenfalls
   iv) *p'* Mol-% mindestens einer weiteren Verbindung **D'**;
   wobei R¹ und R² hierbei unabhängig voneinander je für COO-M oder COOR⁴ steht,
   R³ für H oder CH₃, insbesondere für H,
   R⁴ für 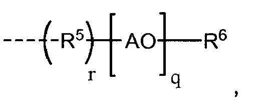 R⁵ für eine Alkylengruppe mit 1 bis 6 C-Atomen,
   R⁶ für H, eine Alkylgruppe, vorzugsweise mit 1 bis 20 C-Atomen, eine Alkylarylgruppe, vorzugsweise mit 7 bis 20 C-Atomen,
   R⁷ für H oder CH₃, insbesondere für H, steht,
   R⁸ für M, eine Alkylgruppe mit 1 bis 6 C-Atomen, für eine Hydroxyalkylgruppe mit 1 bis 6 C-Atomen oder für 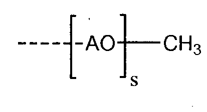 steht;
   wobei der Substituent A unabhängig voneinander für eine C2- bis C4-Alkylengruppe steht, der Index q einen Wert von 2 bis 300, insbesondere von 2 bis 50, darstellt, der Index r einen Wert von 0 bis 1 darstellt und der Index s einen Wert von 1 bis 5 darstellt;
   wobei M = Kation, vorzugsweise H⁺, Alkalimetallion, Erdalkalimetallion, zwei- oder dreiwertiges Metallion, NH₄⁺ oder ein organisches Ammonium, insbesondere bevorzugt H⁺, Na⁺, Ca⁺⁺/2, Mg⁺⁺/2, NH₄⁺ oder ein organisches Ammonium bedeutet;
   wobei *m'*, *n', o*', *p*' unabhängig voneinander Zahlen bedeuten, wobei die Summe *m'+n'+o'+p' =* 100, und *m'* >0*, n'* >0*, o'* >0 und *p'* ≥0 bedeuten; und
   wobei
   *m'* = 10 - 80, vorzugsweise 30 - 60, insbesondere bevorzugt 40 - 55, am meisten bevorzugt 40 - 55,
   *n'* = 10 - 50, vorzugsweise 20 - 40, insbesondere bevorzugt 30 - 40,
   *o'*= 10 - 50, vorzugsweise 15 - 30, insbesondere bevorzugt 17.5 - 30, am meisten bevorzugt 20 - 25,
   *p*' = 0 - 20, vorzugsweise 0 - 10, insbesondere bevorzugt 0 - 5, beträgt. in Gegenwart von einem Initiator für radikalische Polymerisationen bei einer Reaktionstemperatur von 10°C bis 50°C, bevorzugt von 15°C bis 35°C.

Unter dem Begriff "Initiator für radikalische Polymerisationen" oder "Radikalinitiator" wird im vorliegenden Dokument eine Verbindung verstanden, wie sie beschrieben ist als Initiator in CD Römpp Chemie Lexikon, 9. Auflage, Version 1.0, Georg Thieme Verlag, Stuttgart 1995, welche sich für radikalische Polymerisationen eignen.

Vorzugsweise handelt es sich bei den Verbindungen **C'** um Verbindungen, die durch Polymerisation zu Struktureinheiten führen, wie sie als bevorzugte Struktureinheiten **C** vorgehend erwähnt wurden.

Weiter kann es vorteilhaft sein, wenn das Verfahren weiter iv) *p'* Mol-% mindestens einer weiteren Verbindung **D'** aufweist.

Vorzugsweise handelt es sich bei den Verbindungen **D'** um Verbindungen, die durch Polymerisation zu Struktureinheiten führen, wie sie als bevorzugte Struktureinheiten **D** vorgehend erwähnt wurden.

Es kann jedoch auch vorteilhaft sein, wenn weniger als 5 Mol-% einer weiteren Verbindung **D'**, insbesondere keine Verbindung **D'**, verwendet werden.

Vorzugsweise beträgt der Anteil von *m*' = 40 -50 Mol-%, *n'* = 30 - 40 Mol-%, *o'* = 17.5 - 30 Mol-%, insbesondere *o'* = 20 - 25 Mol-% und *p'* = 0 - 5 Mol-%, insbesondere p' = 0 Mol-%.

In einer bevorzugten Ausführungsform werden folgende Mengen der Verbindungen **A', B'** und C' eingesetzt:
40 - 50 Mol-% der Verbindung **A'** der Formel (IV);
30 - 40 Mol-% der Verbindung **B'** der Formel (V);
20 - 25 Mol-% der Verbindung **C'** der Formel (VI);
jeweils bezogen auf die bei der Herstellung eingesetzte Gesamtmolmenge der Verbindungen **A'**, **B'** und **C**'.

In einer weiteren bevorzugten Ausführungsform steht bei dem
Verfahren:
R¹ und R² je für COO-M,
R³ für H;
R⁴ für 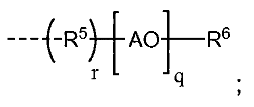 ;
R⁵ für eine Alkylengruppe mit 1 bis 6 C-Atomen;
R⁶ für H, eine Alkylgruppe, vorzugsweise mit 1 bis 20 C-Atomen, insbesondere steht R⁶ für CH₃,
R⁷ für H oder CH₃, insbesondere für H,
R⁸ für M;
der Substituent A unabhängig voneinander für eine C2- bis C4-Alkylengruppe steht, der Index q einen Wert von 2 bis 300, insbesondere von 2 bis 50;
der Index r für einen Wert von 0 bis 1, insbesondere 0;
M = Kation, vorzugsweise H⁺, Alkalimetallion, Erdalkalimetallion, zwei-oder dreiwertiges Metallion, NH₄⁺ oder ein organisches Ammonium, insbesondere bevorzugt H⁺, Na⁺, Ca⁺⁺/2, Mg⁺⁺/2, NH₄⁺ oder ein
organisches Ammonium, am meisten bevorzugt für H⁺, *m*' = 40 - 50;
*n*' = 30 - 40;
*o*' = 20 - 25;
*p*' = 0.
In einer weiteren bevorzugten Ausführungsform steht bei dem
Verfahren:
R¹ und R² je für COO-M,
R³ für H;
R⁴ für 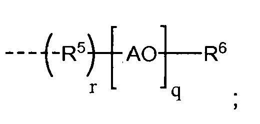 R⁵ für eine Alkylengruppe mit 1 bis 6 C-Atomen;
R⁶ für H, eine Alkylgruppe, vorzugsweise mit 1 bis 20 C-Atomen, insbesondere steht R⁶ für CH₃,
R⁷ für H,
R⁸ für eine Hydroxyalkylgruppe mit 1 bis 6 C-Atomen;
der Substituent A unabhängig voneinander für eine C2- bis C4-Alkylengruppe steht, der Index q einen Wert von 2 bis 300, insbesondere von 2 bis 50;
der Index r für einen Wert von 0 bis 1, insbesondere 0;
M = Kation, vorzugsweise H⁺, Alkalimetallion, Erdalkalimetallion, zwei-oder dreiwertiges Metallion, NH₄⁺ oder ein organisches Ammonium, insbesondere bevorzugt H⁺, Na⁺, Ca⁺⁺/2, Mg⁺⁺/2, NH₄⁺ oder ein organisches Ammonium, am meisten bevorzugt für H⁺;
*m'* = 40 - 50;
*n'* = 30 - 40;
*o'* = 20 - 25;
*p'* = 0.

Vorzugsweise weist das Polymers **P** hergestellt nach dem erfindungsgemässen Verfahren ein mittleres Molekulargewicht Mₙ auf, wie es als bevorzugt vorgehend beschrieben wurde.

Das Verfahren findet in Gegenwart von einem Initiator für radikalische Polymerisationen bei einer Reaktionstemperatur von 10°C bis 50°C, bevorzugt von 15°C bis 35°C, statt. Eine solche Reaktionstemperatur ist unter anderem dahingehend von Vorteil, dass dabei keine oxidativen Schädigung der entstehenden Polymere auftritt, was sich negativ auf die Verbesserung der Langzeitverarbeitbarkeit von hydraulisch abbindenden Zusammensetzungen auswirkt, welche mit Hilfe der Polymere erreicht werden kann.

Vorzugsweise handelt es sich bei dem Initiator für radikalische Polymerisationen um einen Redoxsystem-basierten Initiator oder einen UVbasierten Initiator. Dies ist dahingehend von Vorteil, dass solche Systeme bei Temperaturen von 10°C bis 50°C, bevorzugt von 15°C bis 35°C, effizient zur Bildung von Radikalen beitragen.

Vorzugsweise handelt es sich bei dem Initiator für radikalische Polymerisationen um einen Redoxsystem-basierten Initiator. Insbesondere bevorzugt umfasst der Redoxsystem-basierten Initiator ein reduzierendes Mittel und einem Radikalbildner, wobei das reduzierende Mittel ausgewählt ist aus der Gruppe bestehend aus Natriumhydroxymethansulfinat (Rongalit), Alkalimetallsulfite, Metabisulfite, Ascorbinsäure und Keto-enole und der Radikalbildner ist vorzugsweise eine Peroxidverbindung, beispielsweise Wasserstoffperoxid oder Natriumperoxid.

Vorzugsweise wird der Initiator im Verhältnis von 0.05 bis 20 Gew.-%, bevorzugt 0.01 bis 10 Gew.-%, insbesondere bevorzugt im Verhältnis von 0.1 bis 2 Gew.-%, bezogen auf das Gesamtgewicht der Summe der Verbindungen **A'**, **B'**, **C'** und gegebenenfalls **D'**, eingesetzt.

Findet die Reaktion in einem wässrigen Lösungsmittel, insbesondere in Wasser, statt werden bevorzugt Initiatoren verwendet, die in Wasser gut löslich sind.

Der Initiator kann auf verschiedene Art im Verlauf der radikalischen Polymerisation der Reaktion zugegeben werden. Er kann sowohl vollständig in das Reaktionsgefäss als auch nach Massgabe seines Verbrauchs im Verlauf der Polymerisation kontinuierlich oder stufenweise zugefügt werden. Vorzugsweise wird der Initiator dem Polymerisationsgemisch während dem Verlauf der radikalischen Polymerisation kontinuierlich zugeführt.

Vorzugsweise wird die radikalische Polymerisation bei einem pH von 2 - 4 durchgeführt. Dies ist dahingehend von Vorteil, weil dadurch eine Hydrolysespaltung der Verbindung **B'** weitgehend verhindert wird.

Weiter ist es vorteilhaft, wenn die radikalische Polymerisation in Emulsion, in Masse oder in Lösung, bevorzugt in Lösung, insbesondere bevorzugt in wässriger Lösung, am meisten bevorzugt in Wasser, ausgeführt wird. Wässrige Lösungen sind für eine spätere Verwendung zur Verlängerung der Verarbeitbarkeit von hydraulisch abbindende Zusammensetzungen von Vorteil, falls sie als flüssiges Produkt eingesetzt werden sollen.

Weiter kann es vorteilhaft sein, die Polymerisationsreaktion so durchzuführen, dass die Verbindung **C'** kontinuierlich über die Dauer der Polymerisationsreaktion der Reaktion zugeführt wird.

Die aufgrund des vorgehend beschriebenen, auf radikalischer Polymerisation bei einer Reaktionstemperatur von 10°C bis 50°C basierendem, Herstellungsverfahren hergestellten Polymer **P** weisen den Vorteil auf, dass aufgrund eines gleichmässigen Einbaus der Verbindung **A'**, Verbindung **B'**, Verbindung **C'** und gegebenenfalls Verbindung **D'**, Kammpolymere mit sehr unterschiedlichen und vorteilhaften Strukturen und Eigenschaften erhalten werden können gegenüber Kammpolymeren, welche mit Herstellungsverfahren basierend auf radikalischer Polymerisation bei einer Reaktionstemperatur von über 60°C hergestellt wurden. Überraschenderweise wurde festgestellt, dass bei dem Einsatz von Polymeren **P**, die durch das erfindungsgemäße Verfahren hergestellt wurden, besonders vorteilhafte Eigenschaften erzielt werden, wobei insbesondere die Verarbeitbarkeit von hydraulisch abbindenden Zusammensetzungen wie Zementzusammensetzungen sofort nach Zugabe und/oder über längere Zeiträume verbessert wird. Die unterschiedlichen Eigenschaften werden wahrscheinlich durch unterschiedliche Verteilungen der Seitenketten im Polymer **P** erhalten.

Unter dem Begriff "hydraulisch abbindende Bindemittel" werden im vorliegenden Dokument Verbindungen verstanden, wie sie beschrieben sind in CD Römpp Chemie Lexikon, 9. Auflage, Version 1.0, Georg Thieme Verlag, Stuttgart 1995, welche in Gegenwart von Wasser erhärten, auch unter Sauerstoffausschluss, wie beispielsweise unter Wasser.

Unter dem Begriff "hydraulisch abbindende Zusammensetzung" werden Zusammensetzungen verstanden, die hydraulisch abbindende Bindemittel enthalten. Geeignete Zusammensetzungen und Bindemittel sind dem Fachmann im Bereich der Bauchemie bekannt. In einer bevorzugten Ausführungsform der Erfindung ist das hydraulisch abbindende Bindemittel ausgewählt aus der Gruppe bestehend aus Zement und gebranntem Kalk.

Übliche Zemente sind beispielsweise Portlandzemente oder Tonerdeschmelzzemente und deren jeweilige Mischungen mit üblichen Zusätzen. Als hydraulisch abbindende Bindemittel wird Zement besonders bevorzugt.

Die hydraulisch abbindenden Zusammensetzungen können übliche Zusätze, wie Flugaschen, Silica fume, Schlacke, Hüttensanden und Kalksteinfiller enthalten. Weiterhin sind Zuschlagstoffe wie Sand, Kies, Steine, Quarzmehl, Kreiden sowie als Additive übliche Bestandteile wie Verflüssiger, beispielsweise Lignosulfonate, sulfonierte Naphthalin-Formaldehyd Kondensate, sulfonierte Melamin-Formaldehyd-Kondensate oder Polycarboxylatether, Beschleuniger, Korrosionsinhibitoren, Verzögerer, Schwindreduzierer, Entschäumer oder Porenbildner möglich.

In einem weiteren Aspekt betrifft die Erfindung eine hydraulisch abbindende Zusammensetzung enthaltend mindestens ein Polymer **P**, wie sie als Polymere **P** vorgehend beschrieben sind.

Das Polymer **P** kann als Dispergiermittel oder als Bestandteil eines Dispergiermittels eingesetzt werden. Ein solches Dispergiermittel umfasst mindestens ein Polymer **P.** Das Dispergiermittel kann weitere Bestandteile enthalten. Beispiele für weitere Bestandteile sind Additive, wie Verflüssiger, beispielsweise Lignosulfonate, sulfonierte Naphthalin-Formaldehyd-Kondensate, sulfonierte Melamin-Formaldehyd-Kondensate oder Polycarboxylatether (PCE), Beschleuniger, Verzögerer, Schwindreduzierer, Entschäumer, Luftporenbildner oder Schaumbildner. Typischerweise beträgt dabei der Anteil des Polymer **P** 5 bis 100 Gewichts-%, insbesondere 10 bis 100 Gew.-%, bezogen auf das Gesamtgewicht des Dispergiermittels.

Das Polymer **P** kann insbesondere verwendet werden zur Verbesserung der Verarbeitbarkeit der damit hergestellten hydraulisch abbindenden Zusammensetzungen.

Ein weiterer Aspekt der Erfindung betrifft daher die Verwendung mindestens eines Polymer **P**, wie sie vorgehend beschrieben sind, zur Verbesserung der Verarbeitbarkeit von hydraulisch abbindenden Zusammensetzungen.

Bei der erfindungsgemässen Verwendung zeigen die hydraulisch abbindenden Zusammensetzungen eine verbesserte Verarbeitbarkeit über einen längeren Zeitraum, typischerweise den Zeitraum von 180 min, respektive 240 min, nach Zugabe des Wassers zur hydraulisch abbindenden Zusammensetzung. Das bedeutet, dass die Zusammensetzung nach Zugabe von Wasser und Dispergiermittel, enthaltend das Polymer **P,** noch über vergleichsweise längere Zeit verarbeitbar bleibt, im Vergleich zu Zusammensetzungen, die das Polymer **P** nicht enthalten, oder im Vergleich zu Zusammensetzungen, die andere wasserreduzierende Zusatzmittel wie zum Beispiel herkömmliche Verflüssiger enthalten. Der Vergleich erfolgt beispielsweise so, dass die Zusammensetzungen ohne Polymer **P** oder mit herkömmlichem Verflüssiger anfänglich den gleichen Wasser/Zement Wert (w/z-Wert) bei vergleichbarem Anfangsausbreitmaß, welches über die Dosierungsmenge des Vergleichsverflüssigers eingestellt wird, aufweist. Das Ausbreitmaß von hydraulisch abbindenden Zusammensetzungen, die das Polymer **P** enthalten, nimmt vorzugsweise nach einer bestimmten Zeit, beispielsweise nach 180 min oder nach 240 min, im Wesentlichen nicht oder nur wenig ab, so dass die Veränderung zwischen dem Anfangsausbreitmaß und dem Ausbreitmaß nach 180 Minuten, vorzugsweise sogar nach 240 Minuten, möglichst klein ist.

Bei der erfindungsgemässen Verwendung wird insbesondere die Langzeitverarbeitbarkeit verbessert. Die Langzeitverarbeitbarkeit ist über das Ausbreitmaß nach EN 1015-3 bestimmbar. Bevorzugt wird die Verarbeitbarkeit zum Zeitpunkt nach mehr als 180 min und/oder nach mehr als 240 min verbessert, jeweils nach Zugabe des Wassers. Bevorzugt wird auch die Verarbeitbarkeit am Zeitpunkt nach 180 min und/oder nach 240 min verbessert, jeweils nach Zugabe des Wassers.

Bei der erfindungsgemässen Verwendung von Polymeren **P**, welche als Rest R⁸ M, insbesondere H⁺, Na⁺, Ca⁺⁺/2, Mg⁺⁺/2, NH₄⁺ oder ein organisches Ammonium aufweisen, wird insbesondere die Verarbeitbarkeit kurz nach Zugabe des Wassers, typischerweise 0-5 min nach Zugabe des Wassers, verbessert, messbar beispielsweise über das Ausbreitmaß nach EN 1015-3.

Die erfindungsgemässe Verwendung von Polymeren **P**, welche als Rest R⁸ eine Alkylgruppe mit 1 bis 6 C-Atomen, eine Hydroxyalkylgruppe mit 1 bis 6 C-Atomen oder 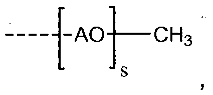 , insbesondere eine Hydroxyalkylgruppe mit 1 bis 6 C-Atomen, aufweisen, sind dahingehend von Vorteil, dass das Ausbreitmaß der hydraulisch abbindenden Zusammensetzung, insbesondere einer zementhaltigen hydraulisch abbindenden Zusammensetzung, gemessen nach EN 1015-3, über den Zeitraum von 180 Minuten, respektive 240 Minuten, (nach Zugabe des Wassers) um

In einer bevorzugten Ausführungsform der Erfindung nimmt das Ausbreitmaß der hydraulisch abbindenden Zusammensetzung, insbesondere einer zementhaltigen hydraulisch abbindenden Zusammensetzung, gemessen nach EN 1015-3, über den Zeitraum von 180 Minuten (nach Zugabe des Wassers) um weniger als 10%, vorzugsweise um weniger als 5%, insbesondere bevorzugt nicht ab.

In einer weiteren bevorzugten Ausführungsform der Erfindung nimmt das Ausbreitmaß der hydraulisch abbindenden Zusammensetzung, insbesondere einer zementhaltigen hydraulisch abbindenden Zusammensetzung, gemessen nach EN 1015-3, über den Zeitraum von 240 Minuten (nach Zugabe des Wassers) um weniger als 20%, vorzugsweise um weniger als 10%, insbesondere bevorzugt gar nicht ab.

Gegenstand der Erfindung ist auch ein Verfahren zur Herstellung einer hydraulisch abbindenden Zusammensetzung mit verlängerter Verarbeitbarkeit, wobei ein hydraulisch abbindendes Bindemittel, Wasser und ein Polymer **P** vermischt werden. Bei dem Polymer **P** handelt es sich um Polymer **P**, wie sie vorgehend beschrieben sind.

Das Polymer **P** wird vorzugsweise in einer Menge von 0.01 bis 5 Gew.-%, insbesondere 0,05 bis 2 Gew.% oder 0,1 bis 1 Gew.%, bezogen auf das Gewicht des hydraulisch abbindenden Bindemittels, eingesetzt. Das Polymer **P** kann getrennt oder als Dispergiermittel vorgemischt in fester oder flüssiger Form zugegeben werden. Das Dispergiermittel wird bevorzugt in flüssiger Form eingesetzt, insbesondere als wässrige Lösung.

Das Polymer **P** oder das Dispergiermittel kann auch in festem Aggregatszustand eingesetzt werden, beispielsweise als Pulver, Schuppen, Pellets, Granulate oder Platten. Solche festen Zusätze lassen sich gut transportieren und lagern. Das Polymer **P** kann im festen Aggregatszustand ein Bestandteil einer sogenannten Trockenmischung, beispielsweise einer Zementzusammensetzung, sein, die über längere Zeit lagerfähig ist und typischerweise in Säcken abgepackt oder in Silos gelagert wird und zum Einsatz kommt. Eine solche Trockenmischung ist auch nach längerer Lagerungszeit einsetzbar und weist eine gute Rieselfähigkeit auf.

Das Polymer **P** kann einer hydraulisch abbindenden Zusammensetzung mit oder kurz vor oder kurz nach der Zugabe des Wassers zugefügt werden. Als besonders geeignet hat sich hierbei die Zugabe des Polymer **P** in Form einer wässrigen Lösung oder Dispersion, insbesondere als Anmachwasser oder als Teil des Anmachwassers, herausgestellt. Die Herstellung der wässrigen Lösung oder Dispersion erfolgt beispielsweise durch Zusetzen von Wasser bei der Herstellung des Polymer **P** oder durch nachträgliches Vermengen mit Wasser. Je nach Art des Polymer **P** entsteht eine Dispersion oder eine Lösung, wobei eine gleichmäßige Lösung bevorzugt ist.

### Beispiele

### 1. Herstellung Polymere durch Vorlage von A, B und C

### Erfindungsgemässe Beispiele P-2, P-3 und P-5

So wurde beispielsweise das erfindungsgemässe Polymer **P-5** hergestellt, indem in einem Reaktionsgefäss mit Rührer 165 g Wasser, 40 g Maleinsäureanhydrid (0.4 Mol), 330 g Allyl-Polyethylenglycol (Polyglycol A 1100, Clariant) mit einem mittleren Molekulargewicht von 1100 g/mol (0.3 Mol), 14.4 g Acrylsäure (0.2 Mol), 1 g einer 10%-igen wässrigen Lösung von Fe (11)-SO₄ 7H₂O und 2 g Natriumhypophosphit-Regler vorgelegt wurden.

Danach wurde bei einer Temperatur von 20°C bis 35°C und einem pH von 2-4 über eine Zeit von 180 min unter Rühren 50 g einer 8.5%-igen Wasserstoffperoxidlösung und 50 g einer 10 %-igen wässrigen Rongalitlösung zugetropft.

Nach Ende des Zutropfens wurde eine klare viskose Polymerlösung erhalten. Die Polymere ***P-2*** und ***P-3*** wurden in gleicher Weise wie Polymer ***P-5*** entsprechend der in Tabelle 1 angegebenen Informationen hergestellt.

### 2. Herstellung Polymere durch Vorlage von A, B und steter Zugabe von C

### Erfindungsgemässe Beispiele P-1, P-4 und P-6

So wurde beispielsweise das erfindungsgemässe Polymer ***P-4*** hergestellt, indem in einem Reaktionsgefäss mit Rührer und 300 g Wasser, 14.7g Maleinsäureanhydrid (0.15 mol), 300 g Allyl-Polyethylenglycol (Polyglycol A 3000, Clariant) mit einem mittleren Molekulargewicht von 3000 g/mol (0.10 Mol), 110 Allyl-Polyethylenglycol (Polyglycol A 1100, Clariant) mit einem mittleren Molekulargewicht von 1100 g/mol (0.1 Mol)g 2.5 g Natrium Hypophosphit und 1 g einer 10%-igen wässrigen Lösung von Fe (II)-SO4 7H2O vorgelegt wurden.

Danach wurde bei einer Temperatur von 20 °C bis 35 °C und einem pH von 2-3 über 150 Minuten unter Rühren eine Lösung aus 23 g Hydroxyethylacrylat (0.2 mol), 7.2 g Acrylsäure (0.1 mol) und 50 g Wasser und gleichzeitig über eine Zeit von 180 min unter Rühren 50 g einer 8.5%-igen Wasserstoffperoxidlösung und 50 g einer 10 %-igen wässrigen Rongalitlösung zugetropft.

Nach Ende des Zutropfens wurde eine klare viskose Polymerlösung erhalten.

Die Polymere ***P-1*** und ***P-6*** wurden in gleicher Weise wie Polymer ***P-4*** entsprechend der in Tabelle 1 angegebenen Informationen hergestellt.

Die erfindungsgemässen Polymere ***P-1*** - ***P-7*** hatten ein mittleres Molekulargewicht Mₙ von 30'000 - 40'000 g/mol.

### 3. Herstellung Vergleichsbeispiel V-1

In einem Reaktionsgefäss mit Rührer wurden 320 g Wasser, 76.6 g Maleinsäure (0.66 Mol) und 330 g eines Allyl-Polyethylenglycols (Polyglycol A 1100, Clariant) mit einem mittleren Molekulargewicht von 1100 g/mol (0.3 Mol) vorgelegt.

Danach wurde bei einer Temperatur von 75°C bis 80°C und einem pH von 2-4 über 4 Stunden unter Rühren 19 g Ammonium-persulfat gelöst in 100g Wasser zugetropft.

240 min nach Beginn des Zutropfens wurde eine klare viskose Polymerlösung erhalten, die anschliessend mit 50%-igen Natronlauge teilneutralisiert wurde.

### 4. Herstellung Vergleichsbeispiel V-2

In einem Reaktionsgefäss mit Rührer wurden 165 g Wasser, 40 g Maleinsäureanhydrid (0.4 mol), 330 g Allyl-Polyethylenglycol mit einem mittleren Molekulargewicht von 1100 g/mol (0.3 Mol), 2 g Natrium Hypophosphit und 14.4 g Acrylsäure (0.2 mol) vorgelegt.

Danach wurde bei einer Temperatur von 80 °C bis 85 °C und einem pH von 2-4 über 180 Minuten unter Rühren 96 g einer 6.3 %-igen Natriumperoxodisulfat Lösung zugegeben.

nach Ende des Zutropfens wurde eine klare viskose Polymerlösung erhalten.

### 5. Herstellung Vergleichsbeispiel V-3

In einem Reaktionsgefäss mit Rührer wurden 165 g Wasser, 40 g Maleinsäureanhydrid (0.4 Mol), 330 g Vinyl-Polyethylenglycol (Polyglycol R 1100, Clariant) mit einem mittleren Molekulargewicht von 1100 g/mol (0.3 Mol), 14.4 g Acrylsäure (0.2 Mol), 1 g einer 10%-igen wässrigen Lösung von Fe (11)-SO₄ 7H₂O und 2 g Natriumhypophosphit-Regler vorgelegt wurden.

Danach wurde bei einer Temperatur von 20°C bis 35°C und einem pH von 2-4 über eine Zeit von 180 min unter Rühren 50 g einer 8.5%-igen Wasserstoffperoxidlösung und 50 g einer 10 %-igen wässrigen Rongalitlösung zugetropft.

### 6. Herstellung Vergleichsbeispiel V-4

In einem Reaktionsgefäss mit Rührer wurden 200 g Wasser, 5 g Maleinsäureanhydrid (0.05 mol), 330 g Allyl-Polyethylenglycol (Polyglycol A 1100, Clariant) mit einem mittleren Molekulargewicht von 1100 g/mol (0.3 Mol), 2.5 g Natrium Hypophosphit und 1 g einer 10%-igen wässrigen Lösung von Fe (II)-SO₄ 7H₂O vorgelegt.

Danach wurde bei einer Temperatur von 20 °C bis 35 °C und einem pH von 2-4 über 150 Minuten unter Rühren eine Lösung aus 23 g Hydroxyethylacrylat (0.2 mol), 16 g Acrylsäure (0.22 mol) und 50 g Wasser und gleichzeitig über eine Zeit von 180 min unter Rühren 50 g einer 8.5%-igen Wasserstoffperoxidlösung und 50 g einer 10 %-igen wässrigen Rongalitlösung zugetropft. 60 min nach Beginn des Zutropfens wurde eine klare viskose Polymerlösung erhalten.

| Polymer | Mol-% in Endpolymer | Temperatur |
|---|---|---|
| | (in %) | (°C) |
| ***P-1*** | m = 12.5 | 20-35 |
| | n = 37.5 (q=24) | |
| | o1 = 50 | |
| | o2= - | |
| ***P-2*** | m = 50 | 20-35 |
| | n = 37.5 (q=24) | |
| | o1 = 12.5 | |
| | o2 = - | |
| ***P-3*** | m = 37.8 | 20-35 |
| | n = 36.6 (q=24) | |
| | o1 = 25.6 | |
| | o2 = - | |
| ***P-4*** | m = 23 | 20-35 |
| | n = 31 (q=24 und q=66) | |
| | o1 = 31 | |
| | o2 = 15 | |
| ***P-5*** | m = 44.5 | 20-35 |
| | n = 33.3 (q=24) | |
| | o1 = 22.2 | |
| | o2 = - | |
| ***P-6*** | m = 44.5 | 20-35 |
| | n = 33.3 (q=24) | |
| | o1 = 22.2 | |
| | o2= - | |
| ***V-1*** | m = 50 | 20-35 |
| | n = 50 (q=24) | |
| | o1 = - | |
| | o2 = - | |
| ***V-2*** | m = 44.5 | 80 - 85 |
| | n = 33.3 (q=24) | |
| | o1 = 22.2 | |
| | o2 = - | |
| ***V-3*** | m = 44.5 | 20-35 |
| | n = - | |
| | (anstelle von n wurde Vinyl-Poly-ethylenglycol verwendet) | |
| | o1 = 22.2 | |
| | o2= - | |
| *V-4* | m = 6.5 | 20-35 |
| | n = 39 (q=24) | |
| | o1 = 28.5 | |
| | o2 = 26 | |

Tabelle 1 Erfindungsgemässe Polymere ***P-1*** bis ***P-6*** bzw. Vergleichspolymere ***V-1*** bis ***V-4*** enthalten die Struktureinheiten **A** der Formel (I), ***P-1*** bis ***P-6*** bzw. Vergleichspolymer ***V-1, V-2 und V-4*** enthalten die Struktureinheiten **B** der Formel (II) und ***P-1*** bis ***P-6*** sowie ***V-2*** bis ***V-4*** zusätzlich noch die Struktureinheit C der Formel (III), mit R¹= COOM, R²= COOM, R³= H, R⁴= -(CH₂-CH₂₀)q-CH₃, R⁷= H, R⁸= H im Falle von o1, resp. R⁸= -CH₂-CH₂-OH im Falle von o2, M= H⁺, Na⁺; Mol-% bedeutet Mol-% der einzelnen Struktureinheiten m, n, o bezogen auf die Gesamtmolmenge der Struktureinheiten von **A**, **B** und **C** im Endpolymer.

### 2. Zementversuche

Die Wirksamkeit der erfindungsgemässen Polymeren wurde im Zement getestet.

Zu 200 g Zement (Schweizer CEM I 42.5) wurden innerhalb von 30 Sekunden 61 g Anmachwasser, in dem 1.33 g einer 30-%igen wässrigen Lösung eines erfindungsgemässen Polymers ***P-1- P-6***, oder eines Vergleichspolymers ***V-1, V-2, V-3*** oder ***V-4*** gelöst war, zugegeben und in einem Fallmischer 2 Minuten gemischt. Die gesamte Mischzeit nass war 2 Minuten. Der Wasser/Zement-Wert (w/z-Wert) betrug 0.3.

Das Ausbreitmass der so hergestellten Zementzusammensetzungen ***ZZ-P-1 -* ZZ-P-6, *ZZ-V-1, ZZ-V-2,* ZZ-V-3** und ***ZZ-V-4*** wurden gemessen, indem ein Zylinder (50 mm Höhe, 50 mm Durchmesser) mit der Zementzusammensetzung befüllt und der Zylinder nach 10 Sekunden vorsichtig angehoben wurde. Der Durchmesser des resultierenden Zementzusammensetzungskuchens wurde mittels einer Schubleere gemessen und als Ausbreitmass angegeben.

Diese Messung wurde nach 180 min und 240 min wiederholt. Vorgängig wurde die Zementzusammensetzung jeweils während 15 Sekunden aufgemischt.

**Tabelle 2: Ausbreitmass (ABM), n.b. = nicht bestimmt**

| **Nr** | **Zusatzmittel** | **ABM (mm) nach** | | |
|---|---|---|---|---|
| | | **2 min** | **180 min** | **240 min** |
| ***ZZ-P-1*** | ***P-1*** | 156 | 150 | 145 |
| ***ZZ-P-2*** | ***P-2*** | 182 | 185 | 185 |
| ***ZZ-P-3*** | ***P-3*** | 165 | 180 | 174 |
| ***ZZ-P-4*** | ***P-4*** | 70 | 147 | 147 |
| ***ZZ-P-5*** | ***P-5*** | 202 | 190 | 190 |
| ***ZZ-P-6*** | ***P-6*** | 186 | 190 | 192 |
| ***ZZ-V-1*** | ***V-1*** | 114 | 146 | 140 |
| ***ZZ-V-2*** | ***V-2*** | 202 | 160 | 140 |
| ***ZZ-V-3*** | ***V-3*** | 50 | 50 | 50 |
| ***ZZ-V-4*** | ***V-4*** | 50 | n.b. | n.b. |

Die Resultate in Tabelle 2 zeigen, dass die erfindungsgemässen Polymere hervorragende verflüssigende Eigenschaften aufweisen verglichen mit den herkömmlichen Polymeren ***V-1*** und ***V-3*** sowie Polymeren, die bei einer Temperatur von 80 °C bis 85 °C hergestellt wurden (***V-2***) oder Polymeren, die eine zu hohe Menge der Struktureinheit C der Formel (III) aufweisen (***V-4***).

Dies zeigen unter anderem die Werte des Ausbreitmasses 180 min, resp. 240 min, nach Zugabe des Wassers zur Zementzusammensetzung enthaltend entsprechendes Polymer. Besonders gute Resultate für die Verflüssigung kurz (2 min) nach Zugabe des Wassers werden in Zementzusammensetzungen erzielt, wenn das Polymer als Rest R⁸ H⁺ und/oder Na⁺ aufweist. Weiter ist ersichtlich, dass die Verflüssigungswirkung über einen langen Zeitraum stabil bleibt. Wenn das Polymer als Rest R⁸ eine Hydroxyalkylgruppe mit 1 bis 6 C-Atomen aufweist, führt das zu einer ansteigenden Verflüssigungswirkung über Zeit (***P-4***).

## Patentansprüche

1. Polymer **P** umfassend:
a. *m* Mol-% mindestens einer Struktureinheit **A** der Formel (I); 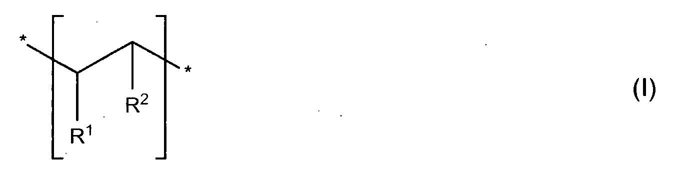
b. *n* Mol-% mindestens einer Struktureinheit **B** der Formel (II); 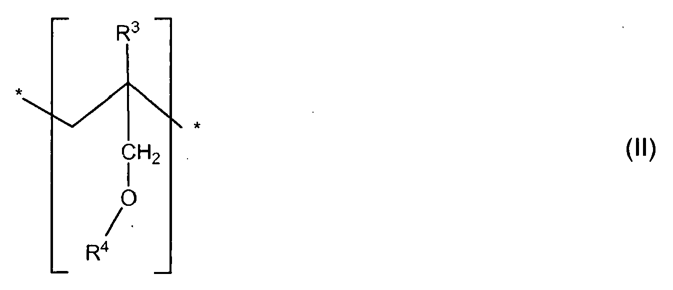
c. *o* Mol-% mindestens einer Struktureinheit **C** der Formel (III); 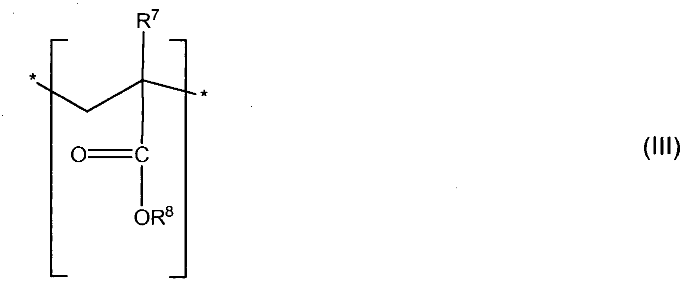 und gegebenenfalls
d. *p* Mol-% mindestens einer weiteren Struktureinheit **D**;
wobei R¹ und R² hierbei unabhängig voneinander je für COO⁻M oder COOR⁴ steht,
R³ für H oder CH₃ steht,
R⁴ für 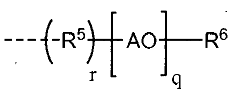 steht,
R⁵ für eine Alkylengruppe mit 1 bis 6 C-Atomen steht,
R⁶ für H, eine Alkylgruppe, vorzugsweise mit 1 bis 20 C-Atomen, eine Alkylarylgruppe, vorzugsweise mit 7 bis 20 C-Atomen,
R⁷ für H oder CH₃,
R⁸ für M, eine Alkylgruppe mit 1 bis 6 C-Atomen, für eine Hydroxyalkylgruppe mit 1 bis 6 C-Atomen oder für 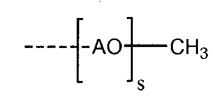 steht;
wobei der Substituent A unabhängig voneinander für eine C2- bis C4-Alkylengruppe steht, der Index q einen Wert von 2 bis 300, insbesondere von 2 bis 50, darstellt, der Index r einen Wert von 0 bis 1 darstellt und der Index s einen Wert von 1 bis 5 darstellt;
wobei M = Kation, vorzugsweise H⁺, Alkalimetallion, Erdalkalimetallion, zwei- oder dreiwertiges Metallion, NH₄⁺ oder ein organisches Ammonium, insbesondere bevorzugt H⁺, Na⁺, Ca⁺⁺/2, Mg⁺⁺/2, NH₄⁺ oder ein organisches Ammonium bedeutet;
wobei *m*, *n, o*, *p* unabhängig voneinander Zahlen bedeuten, wobei die Summe *m*+*n*+*o*+*p* = 100, und *m*>0, *n*>0, *o*>0 und *p*≥0 bedeuten; und
wobei
*m* = 10-80
*n* = 10-50
*o* = 10-50
*p* = 0 - 20 beträgt.

2. Polymer **P** gemäss Anspruch 1, **dadurch gekennzeichnet, dass** das Polymer **P** ein mittleres Molekulargewicht Mₙ von 15'000-50'000 g/mol aufweist.

3. Polymer **P** gemäss Anspruch 1 oder 2, **dadurch gekennzeichnet, dass** bei dem Polymer **P** *m* = 40 - 50, *n* = 30-40, *o* = 17.5-30, insbesondere *o* = 20-25 und *p* = 0-5, insbesondere *p* = 0, beträgt.

4. Polymer **P** gemäss einem der Ansprüche 1 bis 3, **dadurch gekennzeichnet, dass** R⁸ für M steht.

5. Polymer **P** gemäss einem der Ansprüche 1 bis 3, **dadurch gekennzeichnet, dass** R⁸ für eine Alkylgruppe mit 1 bis 6 C-Atomen, für eine Hydroxyalkylgruppe mit 1 bis 6 C-Atomen oder für 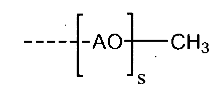 steht, insbesondere für eine Hydroxyalkylgruppe mit 1 bis 6 C-Atomen steht.

6. Verfahren umfassend den Schritt der radikalischen Polymerisation von:
i) *m*' Mol-% mindestens einer Verbindung **A**', welche ein Maleinsäureanhydrid ist oder eine Verbindung der Formel (IV); 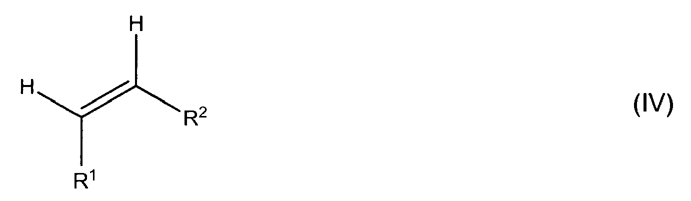
ii) *n*' Mol-% mindestens einer Verbindung **B**' der Formel (V); 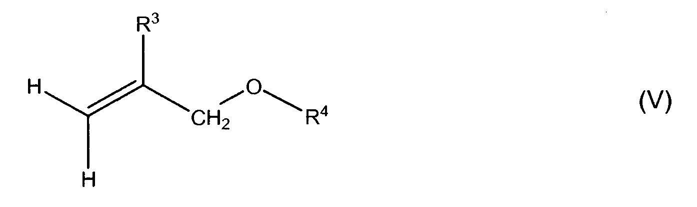
iii) *o*' Mol-% mindestens einer Verbindung **C**' der Formel (VI); 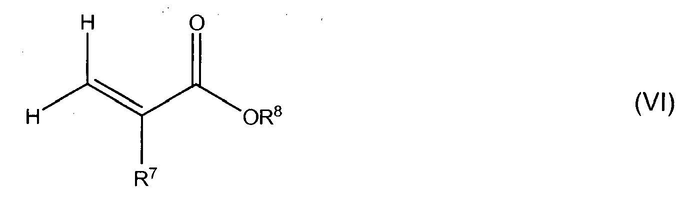 und gegebenenfalls
iv) *p*' Mol-% mindestens einer weiteren Verbindung **D**';
wobei R¹ und R² hierbei unabhängig voneinander je für COO⁻M oder COOR⁴ steht,
wobei R³ für H oder CH₃,
wobei R⁴ für 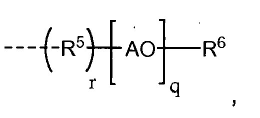
R⁵ für eine Alkylengruppe mit 1 bis 6 C-Atomen,
R⁶ für H, eine Alkylgruppe, vorzugsweise mit 1 bis 20 C-Atomen, eine Alkylarylgruppe, vorzugsweise mit 7 bis 20 C-Atomen,
R⁷ für H oder CH₃,
R⁸ für M, eine Alkylgruppe mit 1 bis 6 C-Atomen, für eine Hydroxyalkylgruppe mit 1 bis 6 C-Atomen oder für 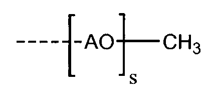 steht;
wobei der Substituent A unabhängig voneinander für eine C2- bis C4-Alkylengruppe steht, der Index q einen Wert von 2 bis 300, insbesondere von 2 bis 50, darstellt, der Index r einen Wert von 0 bis 1 darstellt und der Index s einen Wert von 1 bis 5 darstellt;
wobei M = Kation, vorzugsweise H⁺, Alkalimetallion, Erdalkalimetallion, zwei- oder dreiwertiges Metallion, NH₄⁺ oder ein organisches Ammonium, insbesondere bevorzugt H⁺, Na⁺, Ca⁺⁺/2, Mg⁺⁺/2, NH₄⁺ oder ein organisches Ammonium bedeutet;
wobei *m*', *n*', *o*', *p*' unabhängig voneinander Zahlen bedeuten, wobei die Summe *m'*+*n'*+*o'*+*p'* = 100, und *m*' >0, *n*' >0, *o*' >0 und *p*' ≥0 bedeuten; und
wobei
*m*' = 10 - 80
*n*' = 10 - 50
*o*' = 10 - 50
*p*' = 0 - 20 beträgt;
in Gegenwart von einem Initiator für radikalische Polymerisationen bei einer Reaktionstemperatur von 10°C bis 50°C, bevorzugt von 15°C bis 35°C.

7. Verfahren gemäss Anspruch 6, **dadurch gekennzeichnet, dass** es sich bei dem Initiator für radikalische Polymerisationen um einen Redoxsystem-basierten Initiator handelt.

8. Verfahren gemäss Anspruch 7, **dadurch gekennzeichnet, dass** der Redoxsystem-basierten Initiator ein reduzierendes Mittel und einem Radikalbildner umfasst, wobei das reduzierende Mittel ausgewählt ist aus der Gruppe bestehend aus Natriumhydroxymethansulfinat (Rongalit), Alkalimetallsulfite, Metabisulfite, Ascorbinsäure und Ketoenole und der Radikalbildner eine Peroxidverbindung ist.

9. Verfahren gemäss einem der Ansprüche 6 - 8, **dadurch gekennzeichnet, dass** der Anteil von *m*' = 40 -50 Mol-%, *n*' = 30 - 40 Mol-%, *o*' = 17.5 - 30 Mol-%, insbesondere *o*' = 20 - 25 Mol-% und *p*' = 0 - 5 Mol-%, insbesondere *p*' = 0 Mol-%, beträgt.

10. Verfahren gemäss einem der Ansprüche 6 - 9, **dadurch gekennzeichnet, dass** die radikalische Polymerisation bei einem pH von 2 - 4 durchgeführt wird.

11. Verwendung mindestens eines Polymers **P** gemäss einem der Ansprüche 1 - 5 zur Verbesserung der Verarbeitbarkeit von hydraulisch abbindenden Zusammensetzungen.

12. Verwendung gemäss Anspruch 11, **dadurch gekennzeichnet, dass** das Ausbreitmaß der hydraulisch abbindenden Zusammensetzung, gemessen nach EN 1015-3, über den Zeitraum von 240 Minuten nach Zugabe von Wasser um weniger als 10% abnimmt.

13. Hydraulisch abbindende Zusammensetzung enthaltend mindestens ein Polymer **P** gemäss einem der Ansprüche 1 - 5.

14. Verfahren zur Herstellung einer hydraulisch abbindenden Zusammensetzung mit verlängerter Verarbeitbarkeit, wobei ein hydraulisch abbindendes Bindemittel, Wasser und ein Polymer **P** gemäss einem der Ansprüche 1 -5 vermischt werden.

## Claims

1. Polymer P comprising:
a. *m* mol% of at least one structural unit **A** of formula (I); 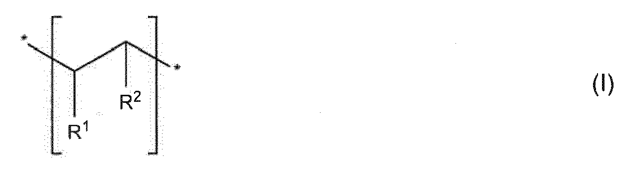
b. *n* mol% of at least one structural unit **B** of formula (II); 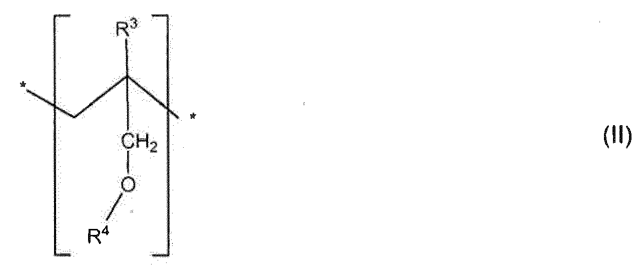
c. *o* mol% of at least one structural unit **C** of formula (III); 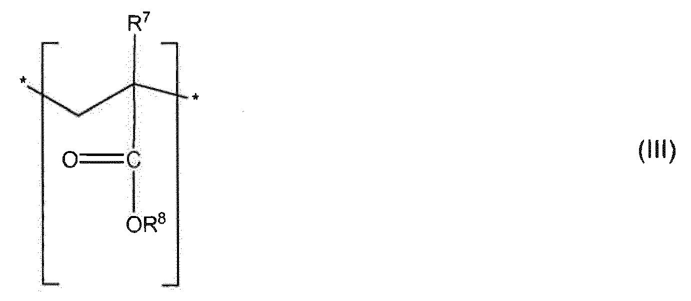 and optionally
d. *p* mol% of at least one further structural unit **D**;
wherein R¹ and R², independently of one another in this case, each represent COO⁻M or COOR⁴,
R³ represents H or CH₃,
R⁴ represents 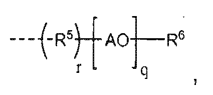 R⁵ represents an alkylene group having 1 to 6 C atoms,
R⁶ represents H, an alkyl group, preferably having 1 to 20 C atoms, an alkyl aryl group, preferably having 7 to 20 C atoms,
R⁷ represents H or CH₃,
R⁸ represents M, an alkyl group having 1 to 6 C atoms, a hydroxyalkyl group
comprising 1 to 6 C atoms or 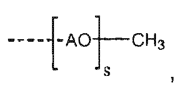 wherein, independently of one another, the substituent A represents a C2 to C4 alkylene group, the index q represents a value of from 2 to 300, more particularly of from 2 to 50, the index r represents a value of from 0 to 1 and the index s represents a value of from 1 to 5;
wherein M = a cation, preferably H⁺, an alkaline metal ion, an alkaline earth metal ion, a divalent or trivalent metal ion, NH₄⁺ or an organic ammonium, particularly preferably H⁺, Na⁺, Ca⁺⁺/2, Mg⁺⁺/2, NH₄⁺ or an organic ammonium;
wherein *m*, *n*, *o*, *p*, independently of one another, represent numbers, wherein the sum *m*+*n*+*o*+*p* = 100, and *m*>0, *n*>0, *o*>0 and *p*≥0; and
wherein
*m* = 10-80
*n* = 10-50
*o* = 10-50
*p* = 0-20.

2. Polymer **P** according to claim 1, **characterised in that** the polymer **P** has an average molecular weight Mₙ of 15,000-50,000 g/mol.

3. Polymer **P** according to either claim 1 or claim 2, **characterised in that**, in the polymer **P**, *m* = 40-50, *n* = 30-40, *o* = 17.5-30, more particularly *o* = 20-25 and *p* = 0-5, more particularly *p* = 0.

4. Polymer **P** according to any of claims 1 to 3, **characterised in that** R⁸ represents M.

5. Polymer **P** according to any of claims 1 to 3, **characterised in that** R⁸ represents an alkyl group having 1 to 6 C atoms, a hydroxyalkyl group having 1 to 6 C atoms or 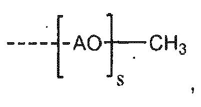 more particularly a hydroxyalkyl group having 1 to 6 C atoms.

6. Method comprising the step of radically polymerising:
i) *m*' mol% of at least one compound **A**', which is a maleic anhydride or a compound of formula (IV); 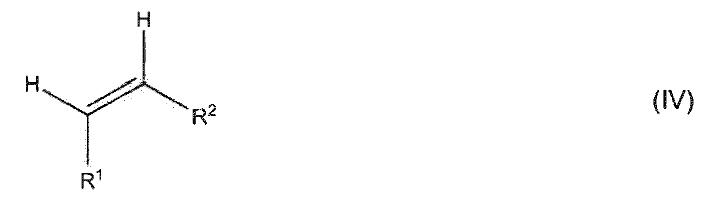
ii) *n*' mol% of at least one compound **B**' of formula (V); 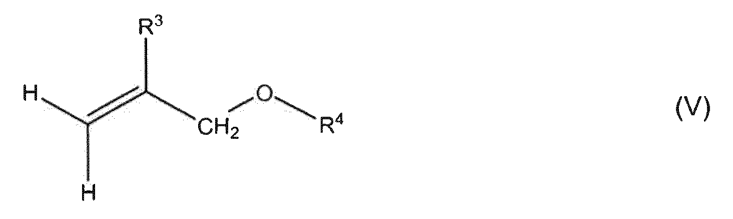
iii) *o*' mol% of at least one compound **C**' of formula (VI); 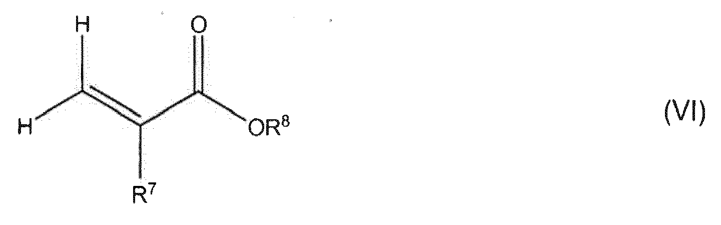 and optionally
iv) *p*' mol% of at least one further compound **D**';
wherein R¹ and R², independently of one another in this case, each represent COO⁻M or COOR⁴,
R³ represents H or CH₃,
R⁴ represents 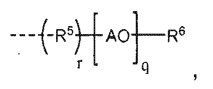 R⁵ represents an alkylene group having 1 to 6 C atoms,
R⁶ represents H, an alkyl group, preferably having 1 to 20 C atoms, an alkyl aryl group, preferably having 7 to 20 C atoms,
R⁷ represents H or CH₃,
R⁸ represents M, an alkyl group having 1 to 6 C atoms, a hydroxyalkyl group
comprising 1 to 6 C atoms or 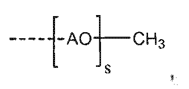 wherein, independently of one another, the substituent A represents a C2 to C4 alkylene group, the index q represents a value of from 2 to 300, more particularly of from 2 to 50, the index r represents a value of from 0 to 1 and the index s represents a value of from 1 to 5;
wherein M = a cation, preferably H⁺, an alkaline metal ion, an alkaline earth metal ion, a divalent or trivalent metal ion, NH₄⁺ or an organic ammonium, particularly preferably H⁺, Na⁺, Ca⁺⁺/2, Mg⁺⁺/2, NH₄⁺ or an organic ammonium;
wherein *m*', *n*', *o*', *p*', independently of one another, represent numbers, wherein the sum *m*'+*n*'+*o*'+*p*'= 100, and *m*'>0, *n*'>0, *o*'>0 and *p*'≥0; and
wherein
*m*' = 10-80
*n*' = 10-50
*o*' = 10-50
*p*' = 0-20;
in the presence of an initiator for radical polymerisations at a reaction temperature of from 10 °C to 50°C, preferably of from 15°C to 35 °C.

7. Method according to claim 6, **characterised in that** the initiator for radical polymerisations is a redox-system-based initiator.

8. Method according to claim 7, **characterised in that** the redox-system-based initiator comprises a reducing agent and a radical former, the reducing agent being selected from the group consisting of sodium hydroxymethanesulfinate (Rongalite), alkali-metal sulphites, metabisulphites, ascorbic acid and ketoenoles, and the radical former is a peroxide compound.

9. Method according to any of claims 6 to 8, **characterised in that** the proportion of *m*' = 40-50 mol%, *n*' = 30-40 mol%, *o*' = 17.5-30 mol%, more particularly *o*' = 20-25 mole% and *p*' = 0-5 mol%, more particularly *p*' = 0 mol%.

10. Method according to any of claims 6 to 9, **characterised in that** the radical polymerisation is carried out at a pH of from 2 to 4.

11. Use of at least one polymer **P** according to any of claims 1 to 5 for improving the processability of hydraulically setting compositions.

12. Use according to claim 11, **characterised in that** the flow spread of the hydraulically setting composition, measured according to EN 1015-3, decreases by less than 10 % after the addition of water over a time period of 240 minutes.

13. Hydraulically setting composition containing at least one polymer **P** according to any of claims 1 to 5.

14. Method for producing a hydraulically setting composition having extended processability, a hydraulically setting binder, water and a polymer **P** according to any of claims 1 to 5 being mixed together.

## Revendications

1. Polymère P comprenant :
a. m % en mole d'au moins une unité structurelle A de formule (I) : 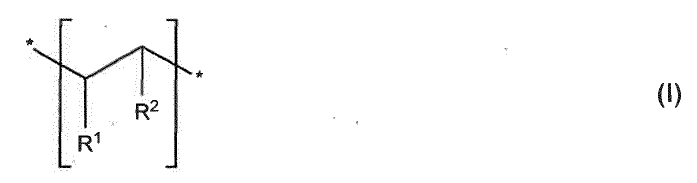
b. n % en mole d'au moins une unité structurelle B de formule (II) : 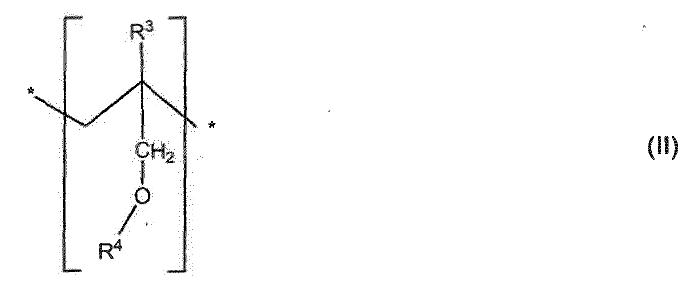
c. o % en mole d'au moins une unité structurelle C de formule (III) : 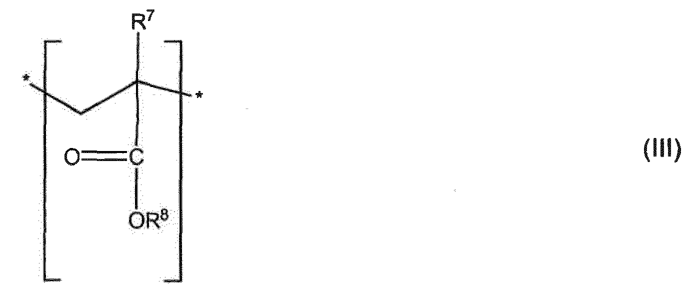 et éventuellement
d. p % en mole d'au moins une autre unité structurelle D ;
dans lequel R¹ et R² représentent en l'occurrence indépendamment l'un de l'autre respectivement COO⁻M ou COOR⁴,
R³ désigne H ou CH₃,
R⁴ désigne 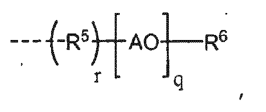
R⁵ désigne un groupement alkylène avec 1 à 6 atomes de carbone,
R⁶ désigne H, un groupement alkyle, de préférence avec 1 à 20 atomes de carbone, un groupement alkylaryle, de préférence avec 7 à 20 atomes de carbone,
R⁷ est H ou CH₃,
R⁸ est M, un groupement alkyle avec 1 à 6 atomes de carbone, un groupement hydroxyalkyle avec 1 à 6 atomes de carbone ou : 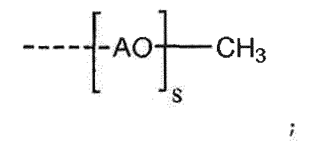
dans lequel le substituant A désigne indépendamment l'un de l'autre un groupement alkylène en C₂ à C₄, l'indice q représente une valeur de 2 à 300, en particulier de 2 à 50, l'indice r représente une valeur de 0 à 1 et l'indice s représente une valeur de 1 à 5 ;
dans lequel M est un cation, de préférence H⁺, un ion de métal alcalin, un ion de métal alcalinoterreux, un ion de métal bivalent ou trivalent, NH₄⁺ ou un ammonium organique, en particulier de préférence H⁺, Na⁺, Ca⁺⁺/2, Mg⁺⁺/2, NH₄⁺ ou un ammonium organique ;
dans lequel m, n, o, p désignent indépendamment l'un de l'autre des nombres, dans lequel la somme n+n+o+p = 100 et m>0, n>0, o>0 et p≥0 ; et dans lequel :
m = 10 à 80,
n = 10 à 50,
o = 10 à 50, et
p = 0 à 20.

2. Polymère P selon la revendication 1, **caractérisé en ce que** le polymère P présente un poids moléculaire moyen Mₙ de 15 000 à 50 000 g/mole.

3. Polymère P selon la revendication 1 ou la revendication 2, **caractérisé en ce que**, dans le polymère P, m = 40 à 50, n = 30 à 40, o = 17,5 à 30, en particulier o = 20 à 25 et p = 0 à 5, en particulier p = 0.

4. Polymère P selon l'une quelconque des revendications 1 à 3, **caractérisé en ce que** R⁸ désigne M.

5. Polymère P selon l'une quelconque des revendications 1 à 3, **caractérisé en ce que** R⁸ désigne un groupement alkyle avec 1 à 6 atomes de carbone, un groupement hydroxyalkyle avec 1 à 6 atomes de carbone ou : 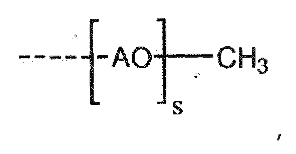 en particulier un groupement hydroxyalkyle avec 1 à 6 atomes de carbone.

6. Procédé comprenant l'étape de polymérisation radicalaire de :
i) m' % en mole d'au moins un composé A', qui est un anhydride d'acide maléique ou un composé de formule (IV) : 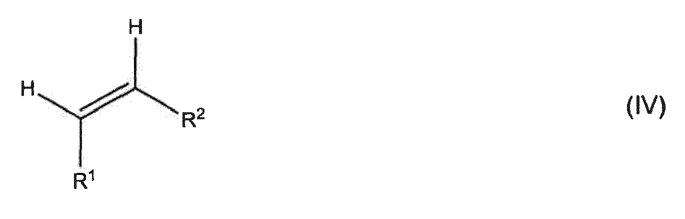
ii) n' % en mole d'au moins un composé B' de formule (V) : 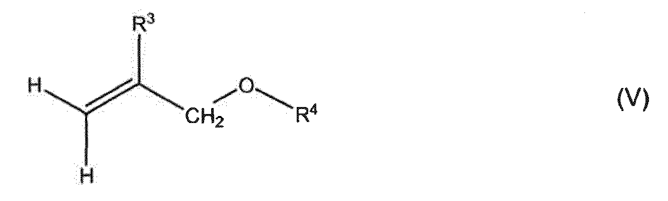
iii) o' % en mole d'au moins un composé C' de formule (VI) : 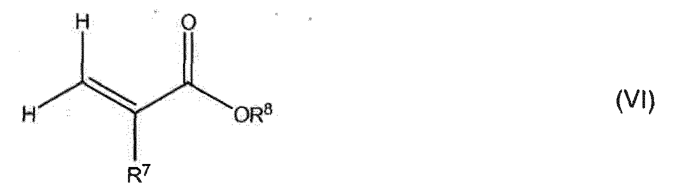 et éventuellement :
iv) p' % en mole d'au moins un autre composé D' ;
dans lequel R¹ et R² désignent en l'occurrence indépendamment l'un de l'autre respectivement COO⁻M ou COOR⁴,
dans lequel R³ désigne H ou CH₃,
dans lequel R⁴ désigne 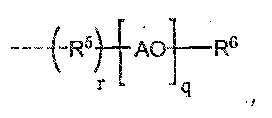
R⁵ désigne un groupement alkylène avec 1 à 6 atomes de carbone,
R⁶ désigne H, un groupement alkyle, de préférence avec 1 à 20 atomes de carbone, un groupement alkylaryle, de préférence avec 7 à 20 atomes de carbone,
R⁷ désigne H ou CH₃,
R⁸ désigne M, un groupement alkyle avec 1 à 6 atomes de carbone, un groupement hydroxyalkyle avec 1 à 6 atomes de carbone ou : 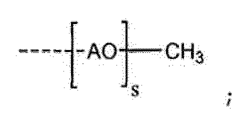
dans lequel le substituant A désigne indépendamment l'un de l'autre un groupement alkylène en C₂ à C₄, l'indice q a une valeur de 2 à 300, en particulier de 2 à 50, l'indice r représente une valeur de 0 à 1 et l'indice s désigne une valeur de 1 à 5 ;
dans lequel M est un cation, de préférence H⁺, un ion de métal alcalin, un ion de métal alcalinoterreux, un ion de métal bivalent ou trivalent, NH₄⁺ ou un ammonium organique, en particulier de préférence H⁺, Na⁺, Ca⁺⁺/2, Mg⁺⁺/2, NH₄⁺ ou un ammonium organique ;
dans lequel m', n', o', p' désignent indépendamment l'un de l'autre des nombres, dans lequel la somme m'+n'+o'+p' = 100 et m'>0, n'>0, o'>0 et p'≥0 ; et
dans lequel :
m' = 10 à 80,
n' = 10 à 50,
o' = 10 à 50 et
p' = 0 à 20 ;
en présence d'un initiateur pour des polymérisations radicalaires à une température réactionnelle de 10°C à 50°C, de préférence de 15 °C à 35 °C.

7. Procédé selon la revendication 6, **caractérisé en ce que** l'initiateur pour les polymérisations radicalaires désigne un initiateur basé sur un système redox.

8. Procédé selon la revendication 7, **caractérisé en ce que** l'initiateur basé sur un système redox comprend un agent réducteur et un formateur de radicaux, dans lequel agent réducteur est choisi dans le groupe constitué d'un hydroxyméthanesulfinate de sodium (Rongalit), d'un sulfite de métal alcalin, d'un métabisulfite, de l'acide ascorbique et de céto-énols et le formateur de radicaux est un composé de peroxyde.

9. Procédé selon l'une elconque des revendications 6 à 8, **caractérisé en ce que** la fraction de m' = 40 à 50 % en mole, de n' = 30 à 40 % en mole, de 0' = 17,5 à 30 % en mole, en particulier de 0' = 20 à 25 % en mole et de p' = 0 à 5 % en mole, en particulier de p' = 0 % en mole.

10. Procédé selon l'une quelconque des revendications 6 à 9, **caractérisé en ce que** la polymérisation radicalaire est effectuée à un pH de 2 à 4.

11. Utilisation d'au moins un polymère P selon l'une quelconque des revendications 1 à 5 pour améliorer la capacité de traitement de composés de prise hydraulique.

12. Utilisation selon la revendication 11, **caractérisée en ce que** l'étalement de la composition de prise hydraulique, mesuré selon la norme EN 1015-3, se réduit dans l'intervalle de temps de 240 minutes après addition d'eau de moins de 10 %.

13. Composition de prise hydraulique contenant au moins un polymère P selon l'une quelconque des revendications 1 à 5.

14. Procédé de fabrication d'une composition de prise hydraulique avec une capacité de traitement plus longue, dans lequel un agent liant à prise hydraulique, de l'eau et un polymère P selon l'une quelconque des revendications 1 à 5 sont mélangés.
